# EUROPEAN PATENT SPECIFICATION

(11) **EP 0 749 682 B1**
(45) Date of publication and mention of the grant of the patent: **15.12.1999**
(21) Application number: 96201558.2
(22) Date of filing: 05.06.1996
(51) Int. Cl.: A01J 7/04

(54) **A method of automatically cleaning or otherwise treating the udder or at least the teats of animals**
Verfahren zur automatischen Reinigung oder andernfalls Behandlung vom Euter oder mindestens von den Zitzen eines Tieres
Procédé de nettoyage automatique ou bien de traitement du pis ou au moins des trayons d'un animal

(30) Priority: 21.06.1995 NL 1000619
(43) Date of publication of application: 27.12.1996
(73) Proprietor: MAASLAND N.V., 3155 PD Maasland (NL)
(72) Inventor: Van der Lely, Olaf, 6312 Steinhausen (CH); Van der Lely, Alexander, 6340 Baar (CH)
(74) Representative: Corten, Maurice Jean F.M.

(56) References cited:
- EP-A- 0 194 730
- EP-A- 0 349 019
- EP-A- 0 535 755
- EP-A- 0 630 558
- EP-A- 0 634 097
- GB-A- 2 272 971
- NL-A- 8 602 505

## Description

The present invention relates to a method as described in the preamble of claim 1.

Such a method is known from EP-A-535755. It is an object of the invention to improve this method. This is achieved by the inventive features as described in the characterizing part of claim 1. The said period of time may be considerably shorter than the interval between consecutive milking runs and will provide a suitable criterion for realizing that an animal is more frequently cleaned or otherwise treated than being milked. This defined period of time may be constant, but may also be determined each time again on the basis of data concerning the physical state of the animal and/or the quality of the milk. The latter data may relate to the extent to which an animal is expected to get dirty, to the electric conductivity, the temperature or the somatic cell count of the milk obtained from said animal.

In the method according to the invention, the duration of the cleaning, depending on the extent to which an animal has got dirty, can be recorded in the computer. From these data there can be deduced which animals get dirty to a considerable extent and which ones remain relatively clean. According to the invention, the animals getting dirty to a considerable extent can enter the aforementioned specific place earlier than the ones that remain relatively clean and will be milked immediately after having been cleaned. The same applies to animals having contracted a disease, for which animals it is of importance that the udder or the teats are cleaned or are treated with a disinfecting fluid more frequently. The latter physical conditions affect the temperature of the animal to be milked and consequently that of the milk obtained, as well as the electric conductivity and the somatic cell count thereof. All these categories, together with a certain weight factor, may contribute to the establishment of the said period of time. When an animal has been cleaned once or twice or has been treated otherwise without having been milked, said animal, upon presenting itself again at the aforementioned place, will be milked immediately after having been cleaned.

According to a further inventive feature, the milking program can be started immediately after finishing a cleaning program and the said period of time can be calculated and thus be defined as soon as the milking program has ended. Said procedure enables to start the milking of animals that are not particularly dirty or do not require any other treatment immediately after cleaning. Therefore, the said defined period of time will be longer for the latter category of animals than for those with whom cleaning or otherwise treating the udder or at least the teats has to take place more frequently and has to be separated from the milking proper. Also in this case, the defined period of time can each time be determined again on the basis of data concerning the physical state of the animal and/or the quality of the milk. These data may relate here to the development of the period of lactation and/or the period of heat of the animal to be cleaned or otherwise to be treated, and/or the degree of activity of the animal, and/or the frequency at which the animal goes to the aforementioned place, and/or the electric conductivity and/or the temperature and/or the somatic cell count of the milk obtained from this animal. In particular, the said period of time may be determined by various of the aforementioned categories of data concerning the physical state of the animal and/or the quality of the milk, a weight factor being attributed to each category.

A first one of the above-mentioned criteria being of relevance to the decision whether an animal will consecutively be cleaned and milked, is the development of the lactation period, which may be recorded for each animal in a computer. It will be obvious that, when in the course of the lactation period the milk production of an animal is optimal, the animal will be milked more frequently than when it is in a phase of the lactation period during which the milk production is considerably lower.

A second criterion for deciding whether or not an animal will consecutively be cleaned and milked may be constituted by the volume of the milk yield. Each time when an animal is milked, the quantity of milk obtained is determined and the milk yield is recorded in the computer. On the basis of the historic data concerning the milk yield stored in the computer, the milk yield to be expected may be determined; this milk yield to be expected may influence the decision whether or not to milk an animal in such a way that, in case of a gradual increase of the milk yield, the time that has to have elapsed since the previous time the animal was consecutively cleaned and milked may gradually be reduced.

A third criterion to be applicable for the decision whether or not an animal will consecutively be cleaned and milked may be constituted by the degree of activity of the animal. This activity can be established by means of an activity meter. Such an activity meter is usually constituted by a step counter that is attached to the animal and is read out as soon as the animal moves along a sensor disposed in the cowshed, preferably at or nearby the specific place provided for cleaning and milking. When a suchlike activity meter is additionally provided with a memory in which the count is automatically recorded each time a fixed period of time of e.g. five minutes, a quarter of an hour, half an hour or any time desired has elapsed, when the animal passes along the sensor, all these counts stored in the memory will be read out and, in this way, there will be obtained a very accurate insight into the activity pattern of the animal in the past period, i.e. in the period from the last time the animal visited the aforementioned specific place. When the animal, after having been milked, walks around, grazes or consumes fodder and then ruminates, and the activity of the animal during the time spent thereon is measured, the decision whether or not to proceed to consecutively cleaning and milking the animal when it presents itself may be taken with the aid of the activity pattern determined. After having ruminated, because of being hindered by its heavy udder, the animal will make a relatively smaller number of movements and will consecutively be cleaned and milked. On the other hand, when it appears from the activity pattern that the animal presents itself at the milking parlour without having gone through the ruminating phase, there may be decided, on the basis of the activity pattern, that the animal has not yet reached the stage in which it is to be cleaned and milked immediately thereafter.

As a fourth criterion for deciding whether or not the animal will consecutively be cleaned and milked may apply the development of the period of heat, which is also recorded for each animal in the computer. In particular, it is assumed that in the oestrus period, during which it could be desirable to have the animal inseminated, the milk production will be smaller. Moreover, in the oestrus period, it will often be ascertained that the animal activity is somewhat higher than before; this will also be the case with the animal's temperature. Consequently, as a fifth criterion for the decision whether an animal will consecutively be cleaned and milked may apply the animal's temperature; said temperature, that can be measured on the milk immediately or almost immediately after having obtained same from the udder, is each time recorded in the computer so that it will be possible to determine the average temperature development for the relevant animal.

A sixth criterion being of relevance when taking the decision whether or not the animal will consecutively be cleaned and milked is constituted by the milk conductivity, which is also determined and recorded in the computer during milking. The milk conductivity pattern may be deduced from the historical data thereof so that it will be possible to diagnose (latent) mastitis in a very early stage, in which case the animal will have to be cleaned and milked at relatively smaller intervals. In this connection there may be mentioned as a further criterion the development of the somatic cell count recorded in the computer.

Finally it should be observed that the frequency of the animal's visits to the aforementioned specific place is to be considered as a criterion for the decision whether or not the animal will consecutively be cleaned and milked. In case of a period of heat, the animal is expected to visit said place more frequently. When an animal, in particular during said period, visits the aforementioned specific place more frequently, the decision not yet to proceed to cleaning and milking this animal will be taken more often.

Also in this situation, of course, all these criteria need not to be applied together. It will be possible to make the decision whether or not consecutively to clean and milk the animal on the basis of only a limited number of criteria. Summarizing, the required interval between the previous time the animal was consecutively cleaned and milked and the next time this procedure will take place can be determined for each animal on the basis of a number of criteria.

## Claims

1. A method of automatically cleaning or otherwise treating the udder or at least the teats of animals and automatically milking animals that are allowed to walk around freely in an accommodation, such as a stable or cowshed or a meadow, and to go individually to a specific place where, after identification of the animals, there can be started a cleaning program to be executed by a computer for cleaning the udder or at least the teats of the animals or otherwise treating same, as well as a milking program to be executed by the computer for connecting teat cups to the teats of the animals and milking same characterised in that the cleaning program and the milking program can be started independently of each other, whereby the cleaning program is started when a defined period of time has elapsed since the previous cleaning or other treatment of the udder or at least the teats of an animal.

2. A method as claimed in claim 1, characterized in that the said period of time is a constant.

3. A method as claimed in claim 1, characterized in that the said period of time is determined each time again on the basis of data concerning the physical state of the animal and/or the quality of the milk.

4. A method as claimed in claim 3, characterized in that the said data relate to the development of the period of lactation and/or the period of heat of the animal to be cleaned or at least to be treated, and/or the degree of activity of this animal, and/or the frequency at which this animal goes to the aforementioned place, and/or the electric conductivity and/or the temperature and/or the somatic cell count of the milk obtained from this animal.

5. A method as claimed in claim 4, characterized in that the said period of time is determined by various of the aforementioned categories of data concerning the physical state of the animal and/or the quality of the milk, a weight factor being attributed to each category.

6. A method as claimed in any one of claims 2 to 5, characterized in that the milking program is started immediately after finishing the cleaning program and that the said period of time is calculated as soon as the milking program has ended.

## Patentansprüche

1. Verfahren zur automatischen Reinigung oder sonstigen Behandlung des Euters oder zumindest der Zitzen von Tieren und zum automatischen Melken von Tieren, die die Möglichkeit haben, sich in einer Unterkunft, wie z. B. einem Stall oder Kuhstall, oder auf einer Wiese frei zu bewegen und einzeln zu einem bestimmten Ort zu gehen, an dem nach Identifikation der Tiere ein von einem Computer durchzuführendes Reinigungsprogramm zum Reinigen des Euters oder zumindest der Zitzen der Tiere oder zur sonstigen Behandlung derselben sowie ein von dem Computer durchzuführendes Melkprogramm zum Anschließen von Zitzenbechern an die Zitzen der Tiere und zum Melken derselben zu starten ist,
dadurch gekennzeichnet, daß das Reinigungsprogramm und das Melkprogramm unabhängig voneinander zu starten sind, wobei das Reinigungsprogramm gestartet wird, wenn seit der vorherigen Reinigung oder sonstigen Behandlung des Euters oder zumindest der Zitzen eines Tieres ein festgelegter Zeitraum verstrichen ist.

2. Verfahren nach Anspruch 1,
dadurch gekennzeichnet, daß der Zeitraum eine Konstante ist.

3. Verfahren nach Anspruch 1,
dadurch gekennzeichnet, daß der Zeitraum auf der Basis von Daten bezüglich der körperlichen Verfassung des Tieres und/oder der Qualität der Milch jedesmal neu festgelegt wird.

4. Verfahren nach Anspruch 3,
dadurch gekennzeichnet, daß die Daten die Entwicklung der Laktationsperiode und/oder der Brunst des zu reinigenden oder zumindest zu behandelnden Tieres betreffen, und/oder den Grad der Aktivität dieses Tieres und/oder die Häufigkeit, mit der dieses Tier den obengenannten Ort aufsucht, und/oder die elektrische Leitfähigkeit und/oder die Temperatur und/oder den Keimgehalt der von diesem Tier gewonnenen Milch.

5. Verfahren nach Anspruch 4,
dadurch gekennzeichnet, daß der Zeitraum von verschiedenen der obengenannten Kategorien von Daten bezüglich der körperlichen Verfassung des Tieres und/oder der Qualität der Milch bestimmt wird, wobei jeder Kategorie ein Gewichtungsfaktor hinzugefügt wird.

6. Verfahren nach einem der Ansprüche 2 bis 5,
dadurch gekennzeichnet, daß das Melkprogramm sofort nach Beendigung des Reinigungsprogramms gestartet wird, und daß der Zeitraum berechnet wird, sobald das Melkprogramm beendet ist.

## Revendications

1. Procédé pour nettoyer ou traiter différemment, automatiquement, un pis ou au moins les trayons d'animaux et pour traire automatiquement des animaux qui peuvent se mouvoir librement dans une installation telle qu'un bâtiment ou une étable ou une prairie, et aller individuellement vers un emplacement spécifique où, après identification des animaux, on peut démarrer par un ordinateur un programme de nettoyage à exécuter pour nettoyer le pis ou au moins les trayons des animaux ou traiter différemment ceux-ci, ainsi qu'un programme de traite à exécuter par l'ordinateur pour relier des gobelets trayeurs aux trayons des animaux et traire ceux-ci, caractérisé en ce que le programme de nettoyage et le programme de traite peuvent être démarrés indépendamment l'un de l'autre, le programme de nettoyage étant démarré lorsqu'une période de temps définie s'est écoulée depuis le nettoyage antérieur ou autre traitement du pis ou d'au moins les trayons d'un animal.

2. Procédé selon la revendication 1, caractérisé en ce que ladite période de temps est une constante.

3. Procédé selon la revendication 1, caractérisé en ce que ladite période de temps est déterminée à chaque fois à nouveau sur la base de données concernant l'état physique de l'animal et/ou la qualité du lait.

4. Procédé selon la revendication 3, caractérisé en ce que lesdites données concernent le développement de la période de lactation et/ou de la période de chaleur de l'animal à nettoyer ou au moins à traiter, et/ou le degré d'activité de cet animal, et/ou la fréquence à laquelle cet animal vient à la place mentionnée ci-dessus, et/ou la conductivité électrique et/ou la température et/ou le décompte des cellules somatiques du lait obtenu à partir de l'animal.

5. Procédé selon la revendication 4, caractérisé en ce que ladite période de temps est déterminée par diverses catégories de données mentionnées ci-dessus concernant l'état physique de l'animal et/ou la qualité du lait, un facteur pondéral étant attribué à chaque catégorie.

6. Procédé selon l'une quelconque des revendications 2 à 5, caractérisé en ce que le programme de traite est démarré immédiatement après avoir fini le programme de nettoyage et en ce que ladite période de temps est calculée aussitôt que le programme de traite est terminé.
